# EUROPEAN PATENT SPECIFICATION

(11) **EP 4 458 311 B1**
(45) Date of publication and mention of the grant of the patent: **08.07.2026**
(21) Application number: 23171014.6
(22) Date of filing: 02.05.2023
(51) Int. Cl.: A61C 1/14, A61C 3/02, A61C 8/00

(54) **GUIDED DENTAL DRILL KIT**
GEFÜHRTES ZAHNBOHRERSET
KIT DE FORET DENTAIRE GUIDÉ

(43) Date of publication of application: 06.11.2024
(73) Proprietor: Nulty, Adam Brian, Ixworth, IP31 2HT (GB); Zachrisson, Patrik Magnus Fredrik, Ixworth, IP31 2HT (GB)
(72) Inventor: Nulty, Adam Brian, Ixworth, IP31 2HT (GB); Zachrisson, Patrik Magnus Fredrik, Ixworth, IP31 2HT (GB)
(74) Representative: Doherty, William

(56) References cited:
- EP-A1- 1 738 713
- EP-A1- 4 169 475
- WO-A1-2016/024681
- WO-A1-2021/240325
- KR-B1- 101 135 113
- US-A- 5 098 293
- US-A1- 2022 313 278

## Description

The present invention relates to a guided dental drill kit. The present disclosures also relates to a dental drill extender for extending a length of a guided dental drill bit, particularly for guided dental surgery. The disclosure further relates to a dental drill extender system comprising a plurality of said dental drill extenders, and a method of preparing for guided dental surgery.

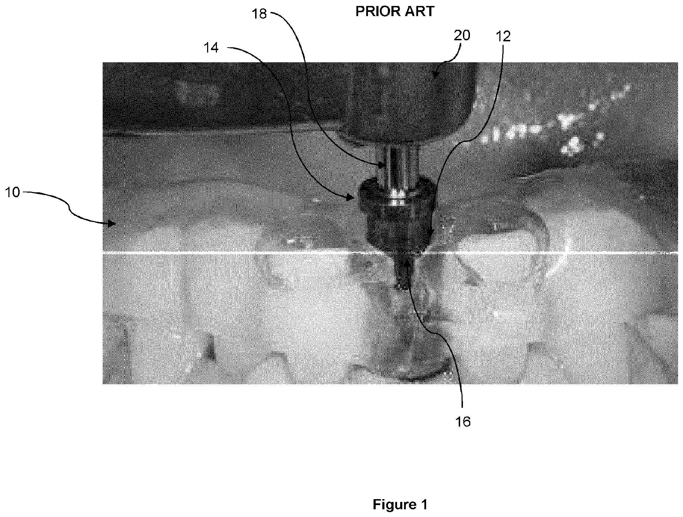

During guided dental surgery, a drill is used to cut into the mandible or maxilla of a patient, for engaging a dental implant, such as a prosthetic tooth or tooth anchor. An example of guided dental surgery is shown in Figure 1. To ensure correct positioning of the dental implant, a drill guide 10 is used, which is formed as a mouthpiece overlying the teeth here, having a guide hole 12 therethrough.

To ensure that the depth of the hole drilled is not too large, the dental drill bit 14 is provided having an integral drill stop 16, having a shank 18 extending therefrom which engages in the chuck 20 of a drill.

In the art, an implant kit is provided for guided implant surgery, which comprises the relevant dental implant, in conjunction with the dental drill bit 14. Different dental drill bits 14 having different drill stops 16 are required to accommodate different patients.

Additionally, many dental drill bit manufacturers do not provide implant kits for guided implant surgery, which excludes their use in this context.

An example of a currently available dental drill extender is disclosed in KR101135113B1. Another example is disclosed in WO 2021/240325 A1, which more particularly relates to an extender adapter device and stop for coupling to milling tools in limited openings.

It is an object of the present invention to obviate or overcome the above-referenced difficulties.

According to the invention, there is provided a guided dental drill kit for performing guided dental surgery on a patient, the kit being defined in claim 1. The guided dental drill kit comprising: a dental guide; a dental drill bit; and a dental drill extender for extending a length of a dental drill bit, the dental drill extender comprising: a shank engageable with a drill chuck; a drill stop extending at least in part radially of the shank for use in guided dental surgery, the drill stop having a side aperture therein; a drill bit receiver extending through the drill stop for receivably engaging a dental drill bit therein; a plurality of drill stop adapters, each of the plurality of drill stop adapters being receivably engageable with the drill stop to alter a length thereof, each of the plurality of drill stop adapters comprising a body portion having at least one side opening, each body portion having a different length; and wherein each drill stop adapter is receivable around the drill stop; characterised in that the at least one side opening allows for access to the side aperture of the drill stop once engaged.

The provision of a dental drill extender provides a means for utilising any existing dental drill bit with guided dental surgery. The drill stop, required for the guided dental surgery, is here provided as a separate component engageable with the dental drill bit, ensuring that the dental surgeon is not limited in their selection of drill, nor do they need a large stock of proprietary dental drill bits having integral drill stops. Drill stop adapters allow for the length of the dental drill stop to be altered without needing to provide additional dental drill extenders. This reduces the number of component parts required to have a functional guided dental drill kit. A side aperture can permit access to the connection point of the drill bit receiver, so that the user can make sure that the drill bit has been correctly received by the drill bit receiver.

Optionally, the drill bit receiver may comprise a cylindrical recess for receiving a dental drill bit.

A receiver recess or slot may be the simplest means of aligning a dental drill bit within the dental drill extender, and which aligns the dental drill bit in the process of attachment.

Preferably, the drill stop may have a flange at a shank-proximal end thereof. Said flange may have an abutment surface against which a drill stop adapter can abut.

The flange provides a mechanism for abutment or other engagement of components with the drill stop, and this is particularly applicable for drill stop adapters which can alter the drill stop length of the dental drill extender.

Preferably, the drill bit receiver may have a tapered or wedging interface for engaging with a dental drill bit.

The use of an interference fit between the dental drill bit and drill bit receiver, rather than using any interlocking parts, means that the dental drill extender can be made to be universally applicable for different dental drill bits.

The drill bit receiver may comprise a connection point or locking means for rotationally locking a drill bit inserted therein relative to the dental drill extender.

Rotational locking of the dental drill bit ensures that drive from an associated drill is fully transmitted to the dental drill bit during guided dental surgery, avoiding any issues with slippage or wobbling.

Additionally, or alternatively, the drill bit receiver may comprise a connection point or locking means for axially locking a drill bit inserted therein relative to the dental drill extender.

A locking means for the dental drill bit ensures that axial displacement of the dental drill bit does not occur in use, which might otherwise cause harm to a patient.

Each drill stop adapter may be receivable around the drill stop. Preferably, each drill stop adapter may engage around the drill stop via an interference fit.

Having the drill stop adapter fit over the drill stop, like a sleeve or sheath, is a straightforward means of being able to alter the dimensions of the drill stop without becoming burdensome to the function of the dental drill. An interference fit is sufficient to hold the drill stop adapter in place during a drilling action, whilst allowing for easy attachment and removal.

The invention will now be more particularly described, by way of example only, with reference to the accompanying drawings, in which:
Figure 1 shows a front perspective view of a guided dental drill kit in accordance with the state of the art;
Figure 2A shows a front view of a dental drill extender in accordance with the first aspect of the invention;
Figure 2B shows a front view of a dental drill bit in accordance with the state of the art;
Figure 2C shows a front view of the dental drill extender of Figure 2A in conjunction with the dental drill bit of Figure 2B;
Figure 3A shows a side view of a plurality of drill stop adapters for use with the dental drill extender of Figure 2A; and
Figure 3B shows a front view of three dental drill extenders of Figure 2C engaged with three of the drill stop adapters of Figure 3A.

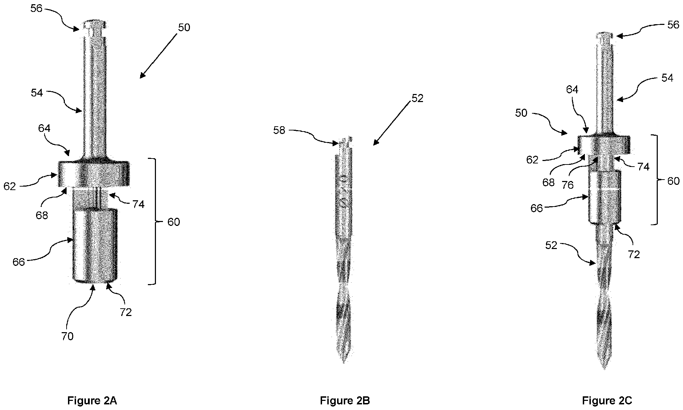

Referring to Figure 2A, there is shown a dental drill extender, referenced globally at 50, and which is compatible for use with a wide range of standard dental drill bits, such as the dental drill bit 52 shown in Figure 2B. The combination of the dental drill extender 50 and the dental drill bit 52 is shown in Figure 2C.

The dental drill extender 50 has a shank 54 which here has a key 56 for receivably engaging with a dental drill. The key 56 will typically have a similar or identical key 58 to that found in standard dental drill bits, so that it can be used with existing dental drill equipment.

The shank 54 extends from a drill stop 60, the drill stop 60 extending at least in part radially of the shank 54. Here, the drill stop 60 has a flange 62 at shank-proximal end 64 thereof, which has a greater radial extent than a main portion 66 of the drill stop 60. The flange 62 has a planar abutment surface 68 facing in the direction of the main portion 66 of the drill stop 60.

The main portion 66 of the drill stop 60 is formed as a cylindrical extension from the flange 62, and has a drill bit receiver 70 therethrough into which the dental drill bit 52 is insertable. The drill stop has a planar end surface 72 which acts as the stop against a dental drill guide during use.

There is a side aperture 74 in the main portion 66 of the drill stop 60, at or adjacent to a connection point 76 or locking means of the drill bit receiver 70. This allows visual access, at least, to the connection point 76, to assist with engagement between the drill bit receiver 70 and the dental drill bit 52. The side aperture 74 is here provided as a cutaway region of the main portion 66 of the drill stop 60, adjacent to the flange 62.

The connection point 76 between the drill bit receiver 70 and the dental drill bit 52 is sufficient to at least enforce rotational locking of the components. This could be achieved by using a non-circular interface therebetween. Furthermore, the connection point may also include an axial lock between the drill bit receiver 70 and the dental drill bit 52 so as to prevent axial dislodging of the drill bit receiver 70 and the dental drill bit 52. However, in the present embodiment, the engagement between the dental drill bit 52 and drill bit receiver 70 is provided via an interference fit. The drill bit receiver 70 may therefore have a tapered or wedge interface to facilitate engagement with different types of dental drill bit 52 of differing dimensions.

In use, the dental surgeon can select their dental drill bit 52 from a broad selection of different proprietary drill bits, according to their preference. The drill bit receiver 70 is a universal receiver, designed to receive any drill bit of a given diameter.

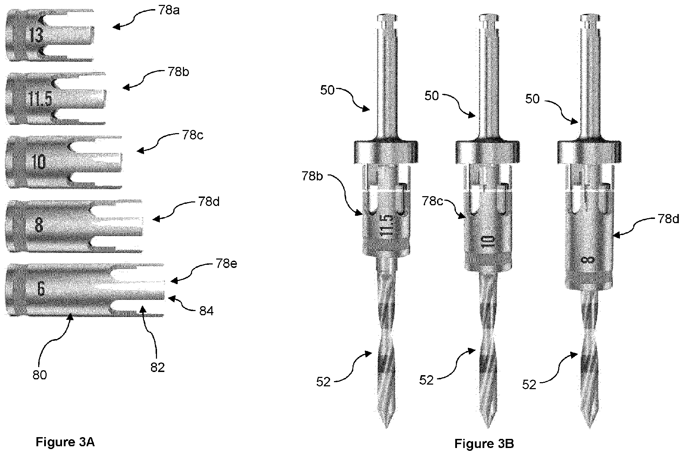

Figure 3A shows a set of drill stop adapters 78a, 78b, 78c, 78d, 78e suitable for engagement with the dental drill extender 50 as herebefore described. The drill stop adapters 78a, 78b, 78c, 78d, 78e effectively alter the position of the stop. The drill stop adapters 78a, 78b, 78c, 78d, 78e have a tubular form, being receivable around the main portion 66 of the drill stop 60, to thereby envelop the main portion 66.

Each drill stop adapter 78a, 78b, 78c, 78d, 78e comprises a body portion 80 of a specific length desirable for guided dental surgery, and includes at least one side opening 82 at a flange-abutment end 84 of the body portion 80. The side openings 82 allow for access to the side aperture 74 of the drill stop 60 once engaged.

The drill stop adapters 78a, 78b, 78c, 78d, 78e preferably include a locking means for axially and/or rotationally locking the selected drill stop adapter 78a, 78b, 78c, 78d, 78e relative to the dental drill extender 50.

It will be appreciated that, whilst a cylindrical interface between the outer surface of the main portion 66 of the drill stop 60 and the internal volume of the drill stop adapters 78a, 78b, 78c, 78d, 78e is shown, any shape-mating interface could be provided to engage the components together. Again, an interference fit is the preferred method of engagement between the drill stop adapters 78a, 78b, 78c, 78d, 78e and the drill stop 60, similar to the engagement between the dental drill bit 52 and drill bit receiver 70.

It is therefore possible to provide a universal dental drill adapter which is engagable with any existing dental drill bit which might be desirable to use in guided dental surgery. This obviates the need to provide a dedicated unitary drill bit which has an integrally formed drill stop thereon.

The words 'comprises/comprising' and the words 'having/including' when used herein with reference to the present invention are used to specify the presence of stated features, integers, steps, or components, but do not preclude the presence or addition of one or more other features, integers, steps, components, or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

The embodiments described above are provided by way of examples only, and various other modifications will be apparent to persons skilled in the field without departing from the scope of the invention as defined in the appended claims.

## Claims

1. A guided dental drill kit for performing guided dental surgery on a patient, the kit comprising: a dental guide; a dental drill bit (52); and a dental drill extender (50) for extending a length of the dental drill bit (52), the dental drill extender (50) comprising:
a shank (54) engagable with a drill chuck;
a drill stop (60) extending at least in part radially of the shank (54) for use in guided dental surgery, the drill stop (60) having a main portion (66) having a side aperture (74) therein;
a drill bit receiver (70) extending through the drill stop (60) for receivably engaging the dental drill bit (52) therein;
a plurality of drill stop adapters (78a, 78b, 78c, 78d, 78e), each of the plurality of drill stop adapters (78a, 78b, 78c, 78d, 78e) being receivably engagable with the drill stop (60) to alter a length thereof, each of the plurality of drill stop adapters (78a, 78b, 78c, 78d, 78e) comprising a body portion (80) having at least one side opening (82), each body portion having a different length; and wherein each drill stop adapter (78a, 78b, 78c, 78d, 78e) is receivable around the drill stop (60); and
**characterised in that** the at least one side opening (82) allows for access to the side aperture (74) of the drill stop (60) once engaged.

2. A guided dental drill kit as claimed in claim 1, wherein the drill bit receiver (70) comprises a cylindrical recess for receiving the dental drill bit (52).

3. A guided dental drill kit as claimed in claim 1 or claim 2, wherein the drill stop (60) has a flange (62) at a shank-proximal end thereof.

4. A guided dental drill kit as claimed in claim 3, wherein the flange (62) has an abutment surface (68) against which a drill stop adapter (78a, 78b, 78c, 78d, 78e) can abut.

5. A guided dental drill kit as claimed in any one of the preceding claims, wherein the drill bit receiver (70) has a tapered or wedging interface for engaging with a dental drill bit (52).

6. A guided dental drill kit as claimed in any one of the preceding claims, wherein the drill bit receiver (70) comprises a connection point or locking means for rotationally locking a dental drill bit (52) inserted therein relative to the dental drill extender (50).

7. A guided dental drill kit as claimed in any one of the preceding claims, wherein the drill bit receiver (70) comprises a connection point or locking means for axially locking a dental drill bit (52) inserted therein relative to the dental drill extender (50).

8. A guided dental drill kit as claimed in any one of the preceding claims, wherein each drill stop adapter (78a, 78b, 78c, 78d, 78e) engages around the drill stop (60) via an interference fit.

## Patentansprüche

1. Geführtes Zahnbohrerset zum Durchführen von geführter Zahnchirurgie an einem Patienten, wobei das Set umfasst: eine Dentalführung; eine Zahnbohrerspitze (52) und eine Zahnbohrerverlängerung (50) zum Verlängern der Länge der Zahnbohrerspitze (52), wobei die Zahnbohrerverlängerung (50) umfasst:
einen Schaft (54), der mit einem Bohrfutter in Eingriff gebracht werden kann;
einen Bohrstopp (60), der sich zumindest zum Teil radial zu dem Schaft (54) erstreckt, zur Verwendung in geführter Zahnchirurgie, wobei der Bohrstopp (60) einen Hauptabschnitt (66) mit einem Seitendurchbruch (74) darin aufweist;
eine Bohrerspitzenaufnahme (70), die sich durch den Bohrstopp (60) erstreckt, zur aufnehmbaren Ineingriffnahme der Zahnbohrerspitze (52) darin;
eine Vielzahl von Bohrstoppadaptern (78a, 78b, 78c, 78d, 78e), wobei jeder der Vielzahl von Bohrstoppadaptern (78a, 78b, 78c, 78d, 78e) aufnehmbar mit dem Bohrstopp (60) in Eingriff gebracht werden kann, um eine Länge dieses zu ändern, wobei jeder der Vielzahl von Bohrstoppadaptern (78a, 78b, 78c, 78d, 78e) einen Körperabschnitt (80) mit mindestens einer Seitenöffnung (82) umfasst, wobei jeder Körperabschnitt eine andere Länge aufweist; und wobei jeder Bohrstoppadapter (78a, 78b, 78c, 78d, 78e) um den Bohrstopp (60) herum aufnehmbar ist; und
**dadurch gekennzeichnet, dass** die mindestens eine Seitenöffnung (82) einen Zugriff auf den Seitendurchbruch (74) des Bohrstopps (60) zulässt, sobald er in Eingriff gebracht wurde.

2. Geführtes Zahnbohrerset nach Anspruch 1, wobei die Bohrerspitzenaufnahme (70) eine zylindrische Aussparung zum Aufnehmen der Zahnbohrerspitze (52) umfasst.

3. Geführtes Zahnbohrerset nach Anspruch 1 oder Anspruch 2, wobei der Bohrstopp (60) einen Flansch (62) an einem zu dem Schaft proximalen Ende davon aufweist.

4. Geführtes Zahnbohrerset nach Anspruch 3, wobei der Flansch (62) eine Anlagefläche (68) aufweist, gegen die ein Bohrstoppadapter (78a, 78b, 78c, 78d, 78e) anliegen kann.

5. Geführtes Zahnbohrerset nach einem der vorhergehenden Ansprüche, wobei die Bohrerspitzenaufnahme (70) eine verjüngte oder sich verkeilende Grenzfläche zur Ineingriffnahme einer Zahnbohrerspitze (52) aufweist.

6. Geführtes Zahnbohrerset nach einem der vorhergehenden Ansprüche, wobei die Bohrerspitzenaufnahme (70) einen Verbindungspunkt oder ein Arretiermittel zum drehbaren Arretieren einer darin eingesetzten Zahnbohrerspitze (52) in Bezug auf die Zahnbohrerverlängerung (50) umfasst.

7. Geführtes Zahnbohrerset nach einem der vorhergehenden Ansprüche, wobei die Bohrerspitzenaufnahme (70) einen Verbindungspunkt oder ein Arretiermittel zum axialen Arretieren einer darin eingesetzten Zahnbohrerspitze (52) in Bezug auf die Zahnbohrerverlängerung (50) umfasst.

8. Geführtes Zahnbohrerset nach einem der vorhergehenden Ansprüche, wobei jeder Bohrstoppadapter (78a, 78b, 78c, 78d, 78e) mittels einer Presspassung um den Bohrstopp (60) herum in Eingriff kommt.

## Revendications

1. Un kit de foret dentaire guidé pour la réalisation d'une chirurgie dentaire guidée sur un patient, le kit comprenant : un guide dentaire ; un foret dentaire (52) ; et une rallonge de foret dentaire (50) destinée à augmenter la longueur (52), ladite rallonge de foret dentaire (50) comprenant :
une tige (54) apte à être engagée dans un mandrin de perceuse ; une butée de forage (60) s'étendant au moins en partie radialement par rapport à la tige (54) pour une utilisation en chirurgie dentaire guidée, la butée de forage (60) comportant une partie principale (66) munie d'une ouverture latérale (74) ; un récepteur de foret (70) s'étendant à travers la butée de forage (60) pour venir en prise par réception avec le foret dentaire (52) ; une pluralité d'adaptateurs de butée de forage (78a, 78b, 78c, 78d, 78e), chaque adaptateur de la pluralité d'adaptateurs de butée de forage (78a, 78b, 78c, 78d, 78e) étant apte à être engagée par réception avec la butée de forage (60) pour en modifier une longueur, chaque adaptateur de la pluralité d'adaptateurs de butée de forage (78a, 78b, 78c, 78d, 78e) comprenant une partie de corps (80) présentant au moins une ouverture latérale (82), chaque partie de corps ayant une longueur différente ; et dans
lequel chaque adaptateur de butée de forage (78a, 78b, 78c, 78d, 78e) est apte à être reçu autour de la butée de forage (60) ; et **caractérisé en ce que** le au moins une ouverture latérale (82) permet d'accéder à l'ouverture latérale (74) de la butée de forage (60) une fois engagée.

2. Un kit de foret dentaire guidé selon la revendication 1, dans lequel le récepteur de foret (70) comprend un évidement cylindrique destiné à recevoir le foret dentaire (52).

3. Un kit de foret dentaire guidé selon la revendication 1 ou 2, dans lequel la butée de forage (60) présente une collerette (62) à son extrémité proximale du côté de la tige.

4. Un kit de foret dentaire guidé selon la revendication 3, dans lequel la collerette (62) présente une surface de butée (68) contre laquelle un adaptateur de butée de forage (78a, 78b, 78c, 78d, 78e) peut venir buter.

5. Un kit de foret dentaire guidé selon l'une quelconque des revendications précédentes, dans lequel le récepteur de foret (70) présente une interface conique ou de calage pouvant être apte venir en prise avec un foret dentaire (52).

6. Un kit de foret dentaire guidé selon l'une quelconque des revendications précédentes, dans lequel le récepteur de foret (70) comprend un point de connexion ou des moyens de verrouillage pour verrouiller en rotation un foret dentaire (52) inséré dans celui-ci par rapport à une rallonge de foret dentaire (50).

7. Un kit de foret dentaire guidé selon l'une quelconque des revendications précédentes, dans lequel le récepteur de foret (70) comprend un point de raccordement ou des moyens de verrouillage pour le verrouillage axial d'un foret dentaire (52) inséré dans celui-ci par rapport à la rallonge de foret dentaire (50).

8. Un kit de foret dentaire guidé selon l'une quelconque des revendications précédentes, dans lequel chaque adaptateur de butée de forage (78a, 78b, 78c, 78d, 78e) vient en prise autour de la butée de forage (60) par l'intermédiaire d'un ajustement serré.
